# EUROPEAN PATENT SPECIFICATION

(11) **EP 2 668 838 B1**
(45) Date of publication and mention of the grant of the patent: **22.07.2015**
(21) Application number: 12187763.3
(22) Date of filing: 09.10.2012
(51) Int. Cl.: A01D 45/02, A01F 11/06

(54) **COMBINE HARVESTER WITH A CHIIPPER FOR CORNCOBS AND PNEUMATIC CONVEYING OF THE CHIPS**
ERNTEMASCHINE MIT ZERKLEINERER FÜR MAISKOLBEN UND PNEUMATISCHER FÖRDERUNG DER CHIPS.
MOSSONNEUSE-BATTEUSE AVEC DECHIQUETEUR POUR DES RAFLES DE MAIS ET TRNASPORT PNEUMATIQUE DES COPEAUX

(30) Priority: 31.05.2012 IT TO20120478
(43) Date of publication of application: 04.12.2013
(73) Proprietor: Gruppo Racca S.r.l., 12030 Marene (CN) (IT)
(72) Inventor: Racca, Gabriele, 12030 MARENE (CN) (IT); Racca, Samuele, 12030 MARENE (CN) (IT)
(74) Representative: Robba, Pierpaolo

(56) References cited:
- EP-A2- 2 210 471
- US-A- 3 680 291
- US-B1- 6 358 141
- US-B2- 7 524 242

## Description

### Technical Field

The present invention refers to the field of agricultural machines, either self-propelled or trailed ones, and more particularly it refers to a combine harvester chipper for corncobs with integrated system for the pneumatic conveying of chips.

### Prior Art

Conventional harvesters include a front collecting head that, while the machine advances on the field, cuts cereal plant stems at their basis, including edible parts and leaves, and it conveys the cut crop into the threshing unit. There exist several kinds of harvesting heads according to the kinds of cereals to be harvested. There are also different kinds of threshing units, which have in common the fact that they have a rotating threshing cylinder within a stationary coaxial counter-thresher consisting of a lower semi-cylindrical grate. The threshing cylinder pulls the received material into the narrow space that separates it from the counter-thresher, thus squeezing the ears or panicles that release grains also owing to the centrifugal force. Axial threshers, i.e. threshers arranged longitudinally with respect to the machine body, have become established in maize threshing. They consist of a compact rotor having helical ends and short embosses anchored to the side surface according to spiral paths capable of entraining the product towards the exit. A higher delivery rate can be obtained by using two adjacent counter-rotating rotors. Freed grains mixed with small-size vegetal residuals falls through the semi-cylindrical grate, while vegetal residuals of bigger size come out from the other end of the shelling cylinders. This material is composed of vegetal residuals of bigger size (in the case of maize, chipped stalks, corncobs and leaves). Grains are conveyed to two or more oscillating sieves located in the lower part of machine. A first sieve receives the material to be sieved and transfers the sieved material to an underlying second sieve of higher clearance that allows passage of grains only. A transversal cylinder throws the undifferentiated vegetal residuals exiting the shelling cylinders towards the back of the machine, the residuals of higher density falling mainly in the region of the sieves for further recovery of grains. A fan adjoining the lower sieve creates a strong air flow between the sieves directed towards the back of the machine. This air flow flows through the upper sieve and carries with itself the lightest and smallest vegetal residuals. Grains, being heavier, are not removed by the cleaning air flow and can therefore gather in a bottom concave portion. A vertical auger takes grains out of the concave portion and introduces them into a container usually provided on board. The same air flow hits the material thrown by the cylinder and conveys it towards a cutting device located at the back of the harvester. During advance of the machine the cut material is spread over the ground for manuring purposes. Alternatively, undifferentiated cut material is collected as waste for zootechnical uses. In conclusion it is to be noted that starting from the cereals continuously harvested by the harvesting head, the threshing unit generates two different flows: the flow of cleaned grains and the flow of vegetal waste.

The corncob is the residual of the panicle after eliminating the husk (leaves) and caryopses (grains). Whole corncobs can be used instead of wood or charcoal as effective fuel for barbecues, as they do not easily crumble and their embers are long-lasting.

Corncobs recovered and adequately ground can have several other possible applications: in producing flours and supports for zootechnical foods, in preparing biodegradable litters for pets, in polishing and finishing metal objects, in lens grinding, in wood sanding, as liquid-absorbent material, as "filler" in plastics production and so on.

For some years now there has been a world-wide developing interest in manufacturing fuels for internal combustion engines from vegetable materials rich in sugars and starch. The improvement of production methods currently allows to obtain bioethanol in third-generation plants, i.e. plants capable of treating lignocellulosic vegetable products such as corncobs. Bioethanol production in such plants requires huge quantities of corncobs and this has stimulated the development of harvesters capable of storing whole corncobs. Patent No. US 6,358,141 describes some kinds of maize harvesters capable of separating corncobs from grains and from the remaining parts of stems and leaves and store grains and corncobs separately aboard. This patent is the precursor of subsequent inventions aimed at improving some aspects of separating whole corncobs and store the same. The main technical solutions suitable for this purpose are shown here below. A first solution consists in that a transversal auger for the recovery of corncobs is provided at the distal end of the upper sieve for grains. Corncobs, being denser than the remaining threshing residuals thrown by the air flow towards the back of the machine, preferably lie on the oscillating upper sieve and they pass through it in the vicinity of the auger.

A second technical solution consists in providing a system for the pneumatic conveying of corncobs towards a second container located above the grains container. The pneumatic conveying system includes a second centrifugal fan having a delivery mouth that inlets air into the end of a duct terminating in the corncobs container. An end of the auger penetrates into the duct where the duct bends upwards for introducing the recovered corncobs. A throttling of the duct is created in the introduction portion. The depression generated here because of the Venturi effect promotes the introduction of the corncobs pushed by the atmospheric pressure acting on the auger. Downstream the throttling there is provided a short discharge duct for preventing the chaff accumulated among the corncobs from clogging the main duct.

The maize harvesters described in US 6,358,141 are not free from drawbacks. A first drawback is the aforesaid possible clogging of the duct. Further drawbacks consist in the fact that not all the corncobs are recovered and a fraction of them goes in the waste. The recovered corncobs are mixed with chaff that causes compaction of the corncobs in the collecting container, thus hindering the emptying operations. Finally, the air flow generated by the second fan tends to push back the corncobs conveyed by the transversal auger, thus slowing down collection thereof.

Patent No. US 7,524,242 is aimed at improving the system for pneumatic collection of corncobs described in the preceding cited document by trying to increase the percentage of collected corncobs and to fully avoid clogging of the pneumatic duct for conveying corncobs. The first object is achieved by adding a rear oscillating sieve for selecting corncobs, adequately horizontally distanced from the sieves for grains recovery. The rear sieve is hit by an additional air flow that thrusts the vegetal residuals lighter than corncobs towards the chipper device, while corncobs pass through the sieve and reach the transversal auger which introduces them into the pneumatic duct. The second object is achieved by using an impeller having substantially flat blades and being coaxial with the auger. The throttling of the duct in the region of the impeller creates by virtue of the Venturi effect a low-pressure area which allows the atmospheric pressure to thrust the corncobs onto the impeller blades. The blades are driven in rotation at a speed higher than that of the auger, so as to counteract the tendency of the air forced into the duct to creep into the transversal auger.

Patent application EP2210471 A2 also aims at increasing the percentage of collected corncobs with respect to the invention described in patent US 6,358,141 mentioned as first. The architecture of the described harvester resembles that of patent US 7,524,242, from which it differs mainly in that:
- the impeller coaxial with the auger is replaced by ad additional auger inserted in the pneumatic conveying duct for corncobs;
- an almost vertical panel is placed in front of the beating cylinder for deflecting the undifferentiated residual vegetal material, with the help of the air flow coming from the fan, in the direction of a rear sieve with parallel bars for selecting the fraction consisting of whole corncobs only. This sieve is adjacent to the sieves for the selection of grains and angled relative to them;
- the depression by virtue of the Venturi effect is created in the throttling existing between the deflector panel and the sieve for selecting corncobs, thus promoting their fall through the sieve toward the transversal auger.

The main features of the prior art EP2210471 A2 in common with the invention to be described are acknowledged in the preamble of Claim 1. The prior art described so far teaches how to better recover whole corncobs remaining after threshing and store them separately from grains. Each of the depicted solutions employs a system for pneumatic conveying under pressure, with injector at the depression point (Venturi) without contact between the whole corncobs and the fan blades.

### Objects of the Invention

The exploitation of whole corncobs is limited to some applications. In the majority of the examples of use mentioned above it would be much more advantageous to start from a chipped product that better enhances some features typical of this material, such as high capacity of absorbing liquids, wear resistance, quite good abrasivity and high elasticity.

The primary object of the present invention is therefore to improve current maize harvesters capable of selecting whole corncobs remaining after threshing, by enabling such harvesters to generate, during progress, a further exiting flow deriving from the chipping of corncobs alone.

Another object of the invention is to allow to temporarily store the chips of corncobs alone in a container aboard the machine and prevent load compaction.

Another object of the invention is to allow to regulate at will the size of the chips of corncobs alone.

### Description of the Invention

In order to achieve said objects the present invention provides a maize harvester including:
- a collecting head to feed a rotating threshing cylinder with the crop during the progress on the ground, the threshing cylinder pulling the crop through counter-threshers for shelling the panicles and forwarding the undifferentiated residuals to an auxiliary beating cylinder that throws said residuals in the direction of an outlet at the back;
- at least two oscillating sieves, one above the other, for winnowing the grains mixed to small vegetal residuals;
- a fan adjoining the sieves for generating a cleaning air flow transversally blowing on the grains falling from the upper sieve, and further blowing on said undifferentiated residuals to help their travelling towards the discharge outlet;
- a deflector panel placed beyond the auxiliary beating cylinder, tilted with respect to the vertical direction by an angle which deflects said undifferentiated residuals in the direction of a further oscillating sieve located below and acted upon by the air flow generated by the fan;
- a transversal auger located below the further sieve for intercepting the whole corncobs which cross through and putting them into a duct of pneumatic transport means;
wherein according to the invention the harvester further includes:
- a chipper device adjacent to the transversal auger for intercepting the corncobs discharged by the auger, the chipper device including a knife-holding rotor and a fixed wall supporting the counter-knives which together delimit the initial section of said duct;
- a pneumatic fan in fluid communication with said duct to intake the corncob chips thrown by said rotor in the duct and eject them out of the delivery mouth within the air flow towards the outlet of said duct, as described in Claim 1.

Further features of the present invention in its different embodiments regarded as innovative are described in the dependent claims.

According to an aspect of the invention the slope of the deflector panel with respect to the vertical direction is adjustable in the direction of the back of the machine in a manner of reducing the fraction of deflected corncobs.

According to another aspect of the invention the deflector panel is opposite to the auxiliary beating cylinder at a prefixed distance and substantially vertical in order to maximize the fraction of deflected corncobs.

According to another aspect of the invention the further sieve is partially superimposed to said upper sieve for the grains, and said transversal auger is spaced from the grains sieves along the horizontal direction.

According to another aspect of the invention the further sieve for the selection of corncobs consists of parallel cylindrical rods sloped down in the direction of the transversal auger.

According to another aspect of the invention the transversal auger is provided with paddles in the end section next to the knife-holding rotor in order to increase the thrust on corncobs.

According to another aspect of the invention the distance between the knifes-holding rotor and the fixed wall supporting the counter-knives is adjustable in order to vary the size of the chips.

According to another aspect of the invention in the carter of pneumatic fan there is placed an adjustable slope deflector for varying the air pressure at the delivery mouth.

According to another aspect of the invention the transport duct for the corncob chips ends inside the upper part of a container provided on board to store the load temporarily.

Advantageously the chips container includes emptying means and means arranged to prevent the load from compacting and including augers.

In an embodiment, said emptying means include a vertical pipe having a length that corresponds approximately to the height of the container in which it is included, the vertical pipe including an auger to lift the material existing in the lower part of the container and transfer it to another auger included in a horizontal discharge pipe which is connected to the vertical pipe by means of a fifth wheel that allows rotation thereof.

### Advantages of the Invention

The main advantage of the harvester made as described in the present invention is that of providing corncob chips as basis for subsequent processes. As chips are produced in parallel with grains, it is possible to discharge them from their container during threshing simultaneously with the discharge of grains.

### Brief Description of Figures

Further objects and advantages of the present invention will become clear from the following detailed description of an embodiment of the same as well as from the attached drawings that are provided only by way of non-limiting example, wherein:
- **figure 1** is a schematic side view of the harvester according to the present invention, viewed from the right side of the operator in cabin;
- **figure 2** is the opposite side view;
- **figure 3** is a side view of a unit, arranged in the harvester of figure 1, for the chipping and pneumatic conveying of the chips;
- **figure 4** is the opposite side view of the unit of figure 3.

### Detailed Description of a Preferred Embodiment of the Invention

In the following description, the scale and proportions of the several elements shown do not necessarily correspond to the actual ones.

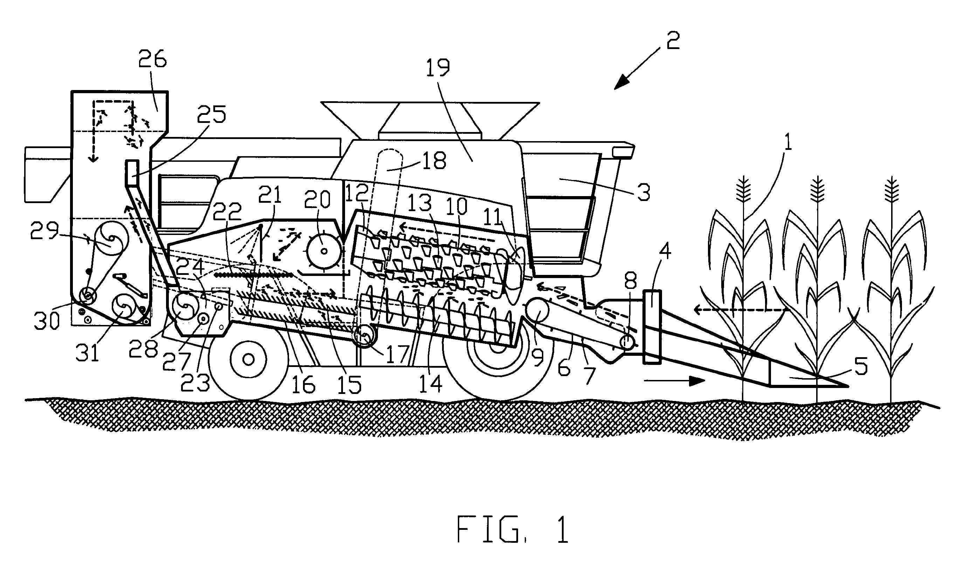

With reference to **figure 1****,** there is shown a corn field 1 on which a self-propelled harvester 2 is working, which in its front part, below and in front of the driver's cabin 3, has a corn collecting head 4. The head 4 is one of those commonly available on the market. Such heads have a series of shrouded conical separators 5 which insert themselves among the plantation rows. Between each pair of separators 5 there is mounted a pair of horizontal grooved, counter-rotating rollers (also called stalk rolls), above which there are provided the husking plates. A pair of longitudinal toothed belts equipped with teeth runs above each plate, which belts together carry the crop towards a transversal auger provided with opposite helical profiles and therefore capable of conveying the crop to the center of the head 4, where a chain elevator 6 operates. The chain is provided with projections 7 and runs between two rollers 8 and 9 taking the product and carrying it to the inlet of the threshing organs. The whole head 4 is hinged to the machine frame so as to be easily replaceable. The head is held by hydraulic actuators which vary its height relative to the ground for better adaptation to the state of the crop. The lower arrow in the figure indicates the forward movement direction, while the upper arrow indicates the opposite direction of the movement of the corn stalks within the head 5. The thickest lines in the figure enclose all those elements that contribute to generate flows of material within the machine for temporary storage and subsequent taking, or for spreading vegetal residuals onto the ground.

The harvester 2 is of the axial type because, although it has higher fuel consumption, it has undoubted advantages over conventional harvesters, such as a lower grain breakage percentage, higher productivity and a stronger mechanical action on residuals. Axiality is referred to the longitudinal arrangement of the threshing cylinder 10, similar to the one described in the introduction. The ends 11 and 12 of the cylinder 10 have a helical profile for promoting inlet and outlet of the flowing material during rotation, whereas teeth 13 arranged along spiral lines project from the cylindrical surface for advancing the material from the inlet end 11 to the outlet end 12. The cage-like counter-thresher is not shown for simplifying drawing. Corn grains mixed with small vegetal residuals fall on a longitudinal auger 14 which conveys them onto a sieve 15, arranged above a sieve 16 having higher clearance at a predetermined distance between the two. Sieve are oscillated for winnowing grains by means of a fan 17 adjoining the lower sieve 16 on the side oriented towards the auger 14. The fan 17 generates an air flow in the axial direction that thrusts vegetal residuals other thank grains towards the back end of the machine. The grains falling through the sieve 16 gather at the bottom, where they feed an auger arranged in a vertical tube 18 which throws them out into a container 19.

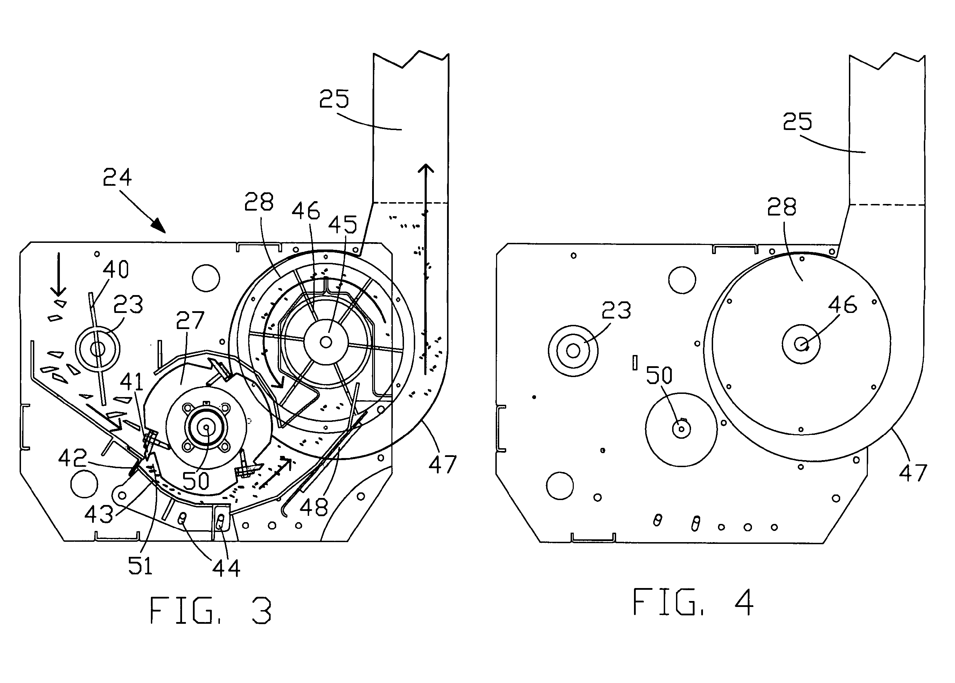

In front of the outlet end 12 of the threshing cylinder 10 there is a beating cylinder 20 arranged transversely, the rotation of the beating cylinder 20 throwing the vegetal residual, composed of corncobs, leaves and stalks, more or less broken, towards the back end of the machine. In front of the beating cylinder 20 at a certain predetermined distance therefrom there is attached an almost vertical panel 21. The slope of the panel 21 relative to the vertical is adjustable at will in the direction of the back of the machine back end. The function of this panel is to deflect the denser material that hits it, mainly the corncobs, towards a third sieve 22 arranged below it at a predetermined distance. The more the panel 21 is tilted relative to the vertical, the less the corncobs are deflected. The sieve 22 consists of a frame in which parallel cylindrical rods are fixed, said rods being equally mutually spaced so as to let corncobs pass through, the leaves being swept away by the air flow generated by the fan 17. The sieve 22 is partially superimposed to the sieve 15 at a predetermined distance, whereas the deflector panel 21 is approximately in the halfway of the sieve 22. Corncobs are discharged at the distal end of the sieve 22 directly on a transversal auger 23 which feeds a system 24 for chipping corncobs and pneumatically conveying the chips into a duct 25 that terminates in the upper portion of a container 26 arranged on board. The detail of the system 24 is shown in **figures 3** and **4****,** but it is useful to say in advance that there are provided a cutting rotor assembly 27 and a pneumatic fan 28. Three augers driven in rotation by hydraulic motors are arranged in the cylindrical container 26, of which: an auger 29 in the central portion and a lower auger 30 for continuously mixing chips to prevent them from compacting, thus making discharge faster; and a vertical auger 31 that takes the product from the bottom of the container 26 and conveys it upwards for it to be collected.

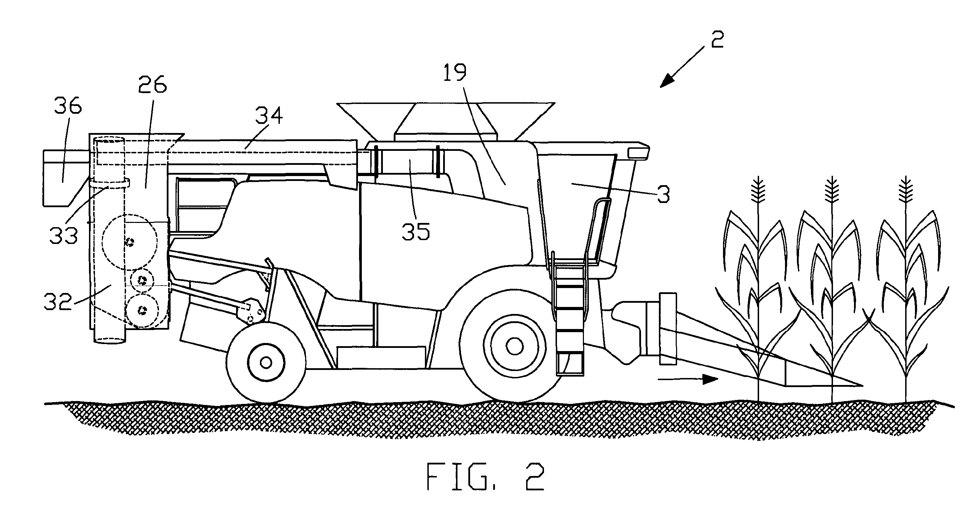

**Figure 2** further shows the container 26 having in its inside a vertical pipe 32 which includes the lifting auger 31. A fifth wheel 33 connects the upper portion of the pipe 32 to a horizontal pipe 34 having in its inside a discharge auger. The pipe 34 can rotate of 90° for discharging chips. Analogously, the grains stored in the container 19 are taken by a tube 35 and discharged through a pipe 36. The vegetal residuals other than corncobs reach a cutting device (not illustrated) and the cut material is spread over the ground through an outlet at the back end of the machine.

**Figure 3** shows in detail the chipping and conveying system 24 of **Figure 1****.** Referring to **Figure 3****,** the transversal auger 23 is visible, provided with radial paddles 40 in its end portion, in order to increase the thrust on corncobs towards the adjoining cutting device. The auger 23 is driven by a hydraulic motor. The cutting device includes a rotor 27 made of cast iron, to which three pairs of tangential knives 41 are attached by means of screws, said pairs being mutually arranged at 120°. The rotor 27 is supported by a pin 50 by means of a radial bearing, and it is driven in rotation at a speed of about 3000 rpm by a belt transmission. Cutting of the corncobs is effected by a pair of counter-knives 42 mounted to an end of a fixed wall 43, parallel for a portion of at least 90° to the circular profile of the rotor 27. The wall 43 is spaced from the rotor 27 so as to create a gap 51 sufficient for the passage of the chips. By acting upon adjustment means 44 (screws and slots) this distance can be varied in order to adapt the size of the chips, the minimum size being obtained by the minimum distance. The gap 51 corresponds to the inlet portion of a duct for the pneumatic conveying of the chips that consist of fragments thrown forward by the thrust imparted by the pairs of rotating knives 41. The further advancing of the chips in the duct is effected by a pneumatic fan 28 of the centrifugal type, which sucks the chips thrown into the inlet portion 51 and ejects them upwards mixed to the air flow exiting the delivery mouth that feeds the actual duct 25. At the exit of the duct 25 the air is expelled through an ejector and the chips are led into the container 26. The fan 28 has a rotor 45 driven by a belt transmission. The rotor 45 drives a radial paddles assembly 46 contained in a carter 47 which forms the volute or spiral cage that can be better seen in **figure 4** showing the opposite side. The suction mouth of the fan 28 is in fluidic continuity with the inlet portion 51 of the duct. The chips pass through the paddles assembly 46, the flat, radial configuration of which reduces abrasion. A deflector 48 with adjustable slope varies the volute section in the carter 47, thus varying the air pressure at the delivery mouth.

From the description provided for a preferred embodiment it is clear that changes can be brought by the person skilled in the art without departing from the scope of the invention as resulting from the appended claims.

## Claims

1. Combine harvester (2) for maize including:
- a collecting head (4) to feed a rotating threshing cylinder (10) with the crop during the progress on the ground, the threshing cylinder pulling the crop through counter-threshers for shelling the panicles and forwarding the undifferentiated residuals to an auxiliary beating cylinder (20) that throws said residuals in the direction of an outlet at the back;
- at least two oscillating sieves (15, 16), one above the other, for winnowing the grains mixed with small vegetal residuals;
- a fan (17) adjoining the sieves (15, 16) for generating a cleaning air flow transversally blowing on the grains falling from the upper sieve (15), and further blowing on said undifferentiated residuals to help their travelling towards the discharge outlet;
- a deflector panel (21) placed beyond the auxiliary beating cylinder (20), tilted with respect to the vertical direction by an angle which deflects said undifferentiated residuals in the direction of a further oscillating sieve (22) located below and acted upon by the air flow generated by the fan (17);
- a transversal auger (23) located below the further sieve (22) for intercepting the whole corncobs which cross through and putting them into a duct (25) of pneumatic transport means;
**characterized in that** it further includes:
- a chipper device (27, 41, 42, 43) adjacent to the transversal auger (23) for intercepting the corncobs discharged by the auger, the chipper device including a knife-holding rotor (27) and a fixed wall (43) supporting the counter-knives (42) which together delimit the initial section (51) of said duct (25),
- a pneumatic fan (28) in fluid communication with said duct (25) to intake the corncob chips thrown by said rotor (27) in the duct (25) and eject them out of the delivery mouth within the air flow towards the outlet of said duct (25).

2. The combine harvester of claim 1, **characterized in that** the slope of the deflector panel (21) with respect to the vertical direction is adjustable in the direction of the back of the machine in a manner of reducing the fraction of deflected corncobs.

3. The combine harvester of claim 1, **characterized in that** the deflector panel (21) is opposite to the auxiliary beating cylinder (20) at a prefixed distance and substantially vertical in order to maximize the fraction of deflected corncobs.

4. The combine harvester of claim 1, **characterized in that** said further sieve (22) is partially superimposed to said upper sieve (15) for the grains, and said transversal auger (23) is spaced from the grains sieves (15, 16) along the horizontal direction.

5. The combine harvester of claim 1, **characterized in that** the further sieve (22) for the selection of corncobs consists of parallel cylindrical rods sloped down in the direction of the transversal auger.

6. The combine harvester of claim 1, **characterized in that** said transversal auger (23) is provided with paddles (40) in the end section next to the knife-holding rotor (27) in order to increase the thrust on corncobs.

7. The combine harvester of claim 1, **characterized in that** the distance between the knife-holding rotor (27) and the fixed wall (43) supporting the counter-knives (42) is adjustable in order to vary the size of the chips.

8. The combine harvester of claim 1, **characterized in that** in the carter (47) of pneumatic fan (28) there is placed an adjustable slope deflector (48) is placed for varying the air pressure at the delivery mouth.

9. The combine harvester of claim 1, **characterized in that** the transport duct (25) for the corncob chips ends inside the upper part of a container (26) provided on board to store the load temporarily.

10. The combine harvester of claim 9, **characterized in that** the chips container (26) includes emptying means (31-34) and means (29, 30) arranged to prevent the load from compacting and including augers (29, 30).

11. The combine harvester of claim 10, **characterized in that** said emptying means include a vertical pipe (32) having a length corresponding approximately to the height of the container (26) in which it is included, the vertical pipe (32) including an auger (31) to lift the material existing in the lower part of the container (26) and transfer it to another auger included in a horizontal discharge pipe (34) which is connected to the vertical pipe (32) by means of a fifth wheel (33) that allows rotation thereof.

## Patentansprüche

1. Maismähdrescher (2) umfassend:
- einen Erntekopf (4), der eingerichtet ist, um einer rotierenden Dreschtrommel (10) bei der Fortbewegung auf dem Boden das Erntegut zuzuführen, wobei die Dreschtrommel das Erntegut durch Gegendrescher zieht, um die Kolben zu schälen und die unsortierten Reste einem zusätzlichen Dreschtrommel (20) zu fördern, die diese Reste in die Richtung eines hinteren Auslasses wirft;
- mindestens zwei übereinander angeordnete schwingende Siebe (15, 16), um die mit kleinen pflanzlichen Resten gemischten Körner zu sieben;
- ein den Sieben (15, 16) benachbartes Gebläse (17) zur Erzeugung eines Reinigungsluftstroms, der quer über die durch das Obersieb (15) fallenden Körner bläst und auch über die unsortierten Reste bläst, um ihre Fahrt zu dem hinteren Auslass zu unterstützen;
- eine jenseits des zusätzlichen Dreschtrommels (20) angeordnete Umlenkplatte (21), die um einen Winkel relativ zu der vertikalen Richtung so geneigt ist, dass sie die unsortierten Reste in die Richtung eines zusätzlichen, unterliegenden, schwingenden Siebs (22) umlenkt, das mit dem durch das Gebläse (17) erzeugten Luftstrom beaufschlagt wird;
- eine unter dem zusätzlichen Sieb (22) angeordnete Querschnecke (23), die eingerichtet ist, um die sie durchquerenden ganzen Maisspindel aufzufangen und diese in eine Leitung (25) von pneumatischen Fördermitteln einzuleiten;
**dadurch gekennzeichnet, dass** der Mähdrescher weiter umfasst:
- eine der Querschnecke (23) benachbarte Zerkleinerungsvorrichtung (27, 41, 42, 43), die eingerichtet ist, um die aus der Schnecke ausgelaufenen Maisspindel aufzufangen, wobei die Zerkleinerungsvorrichtung einen Messerhalterotor (27) und eine die Gegenmesser (42) unterstützende stationäre Wand (43), wobei dieser Rotor und diese Wand zusammen den Anfangsabschnitt (52) der Leitung (25) begrenzen;
- ein pneumatisches Gebläse (28), das in Fluidverbindung mit der Leitung (25) steht, um die von dem Rotor (27) geworfenen Maisspindelstücke in die Leitung (25) anzusaugen und diese aus dem Austrittsmund und in den in die Richtung des Auslasses der Leitung (25) gerichteten Luftstrom auszuwerfen.

2. Mähdrescher nach Anspruch 1, **dadurch gekennzeichnet, dass** die Neigung der Umlenkplatte (21) zur Lotrechten in Richtung des Hinteren der Maschine justierbar ist, so dass der Anteil von umgelenkten Maisspindeln reduziert wird.

3. Mähdrescher nach Anspruch 1, **dadurch gekennzeichnet, dass** die Umlenkplatte (21) dem zusätzlichen Dreschtrommel (20) gegenüberliegend mit einem vorgegebenen Abstand und im Wesentlichen vertikal angeordnet ist, um den Anteil von umgelenkten Maisspindeln zu maximieren.

4. Mähdrescher nach Anspruch 1, **dadurch gekennzeichnet, dass** das zusätzliche Sieb (22) teilweise über dem Obersieb (15) für die Körner angeordnet ist und die Querschnecke (23) entlang der horizontalen Richtung von den Körnersieben (15, 16) beabstandet ist.

5. Mähdrescher nach Anspruch 1, **dadurch gekennzeichnet, dass** das zusätzliche Sieb (22) zur Sortierung der Maisspindel aus parallelen zylindrischen Stäben besteht, die abwärts in Richtung der Querschnecke geneigt sind.

6. Mähdrescher nach Anspruch 1, **dadurch gekennzeichnet, dass** die Querschnecke (23) in dem dem Messerhalterotor (27) benachbarten Endabschnitt mit Schaufeln (40) versehen ist, um den Schub auf die Maisspindel zu erhöhen.

7. Mähdrescher nach Anspruch 1, **dadurch gekennzeichnet, dass** der Abstand zwischen dem Messerhalterotor (27) und der die Gegenmesser (42) unterstützenden stationären Wand (43) justierbar ist, um die Abmessungen der Maisspindelstücke zu variieren.

8. Mähdrescher nach Anspruch 1, **dadurch gekennzeichnet, dass** ein in Neigung justierbarer Umlenker (48) in dem Gehäuse (47) des pneumatischen Gebläses (28) angeordnet ist, um den Luftdruck an dem Austrittsmund zu variieren.

9. Mähdrescher nach Anspruch 1, **dadurch gekennzeichnet, dass** die Föerderleitung (25) für die Maisspindelstücke in dem Oberteil eines zur zeitweiligen Lagerung der Ladung vorgesehenen an Bord angeordneten Behälters (26) endet.

10. Mähdrescher nach Anspruch 9, **dadurch gekennzeichnet, dass** der Maisspindelstückbehälter (26) Entleerungsmittel (31-34) sowie Mittel (29, 30), die zur Vermeidung der Verdichtung der Ladung vorgesehen sind und Schnecken (29, 30) aufweisen, umfasst.

11. Mähdrescher nach Anspruch 10, **dadurch gekennzeichnet, dass** die Entleerungsmittel ein vertikales Rohr (32) umfassen, das eine Länge hat, die ungefähr der Höhe des dieses Rohr enthaltenden Behälters (26) entspricht, wobei das vertikale Rohr (32) eine Schnecke (31) umfasst, um das sich in dem unteren Teil des Behälters (26) befindliche Material zu heben und es auf eine andere Schnecke zu übertragen, die in einem horizontalen Auslassrohr (34) enthalten ist, das mittels einer Sattelkupplung (33), die seine Rotation ermöglicht, mit dem vertikalen Rohr (32) verbunden ist.

## Revendications

1. Moissonneuse-batteuse (2) pour le maïs comportant:
- une tête de récolte (4) pour alimenter avec la culture un cylindre de battage rotatif (10) pendant l'avancement sur le terrain, le cylindre de battage tirant la culture à travers des contre-batteurs pour écosser les panicules et pour faire avancer les résidus indifférenciés à un cylindre de battage auxiliaire (20) qui jette lesdits résidus dans la direction d'une sortie à l'arrière;
- au moins deux tamis oscillants (15, 16), l'un au-dessus de l'autre, pour vanner les grains mélangés à des petits résidus végétaux;
- un ventilateur (17) adjacent aux tamis (15, 16) pour générer un flux d'air de nettoyage soufflant en direction transversale sur les grains qui tombent du tamis supérieur (15), et soufflant en outre sur lesdits résidus indifférenciés pour aider leur avancement vers la sortie de décharge;
- un panneau déflecteur (21) placé au-delà du cylindre de battage auxiliaire (20), incliné par rapport à la direction verticale d'un angle qui dévie lesdits résidus indifférenciés dans la direction d'un tamis oscillant supplémentaire (22) situé au-dessous et investi par le flux d'air généré par le ventilateur (17);
- une vis transporteuse transversale (23) placée au-dessous du tamis supplémentaire (22) pour intercepter les rafles de maïs entiers qui le traversent et les introduire dans un conduit (25) de moyens de transport pneumatique;
**caractérisée en ce qu'**elle comprend en outre:
- un dispositif déchiqueteur (27, 41, 42, 43) adjacent à la vis transporteuse transversale (23) pour intercepter les rafles de maïs déchargés par la vis transporteuse, le dispositif déchiqueteur comprenant un rotor porte-couteaux (27) et une paroi fixe (43) supportant les contre-couteaux (42) qui ensemble délimitent la section initiale (51) dudit conduit (25);
- un ventilateur pneumatique (28) en communication de fluide avec ledit conduit (25) pour aspirer les copeaux de rafles de maïs jetés dans le conduit (25) par ledit rotor (27) et les éjecter hors de la bouche de refoulement à l'intérieur du flux d'air vers la sortie dudit conduit (25).

2. Moissonneuse-batteuse selon la revendication 1, **caractérisée en ce que** l'inclinaison du panneau déflecteur (21) par rapport à la direction verticale est réglable dans la direction de l'arrière de la machine de manière à réduire la fraction de rafles de maïs déviés.

3. Moissonneuse-batteuse selon la revendication 1, **caractérisée en ce que** le panneau déflecteur (21) est placé en face du cylindre de battage auxiliaire (20) à une distance préfixée et sensiblement vertical de manière à maximiser la fraction de rafles de maïs déviés.

4. Moissonneuse-batteuse selon la revendication 1, **caractérisée en ce que** ledit tamis supplémentaire (22) est partiellement superposé audit tamis supérieur (15) pour les grains, et ladite vis transporteuse transversale (23) est espacée des tamis pour les grains (15, 16) le long de la direction horizontal.

5. Moissonneuse-batteuse selon la revendication 1, **caractérisée en ce que** le tamis supplémentaire (22) pour la sélection de rafles de maïs est constitué par des tiges cylindriques parallèles inclinées vers le bas en direction de la vis transporteuse transversale.

6. Moissonneuse-batteuse selon la revendication 1, **caractérisée en ce que** ladite vis transporteuse transversale (23) est pourvue d'aubes (40) dans la section d'extrémité proche du rotor porte-couteaux (27) afin d'augmenter la poussée sur les rafles de maïs.

7. Moissonneuse-batteuse selon la revendication 1, **caractérisée en ce que** la distance entre le rotor porte-couteaux (27) et la paroi fixe (43) supportant les contre-couteaux (42) est réglable afin de varier la taille des copeaux.

8. Moissonneuse-batteuse selon la revendication 1, **caractérisée en ce qu'**un déflecteur ayant une inclinaison ajustable (48) est placé dans le carter (47) du ventilateur pneumatique (28) pour faire varier la pression de l'air à la bouche de refoulement.

9. Moissonneuse-batteuse selon la revendication 1, **caractérisée en ce que** le conduit de transport (25) pour les copeaux de rafles de maïs se termine à l'intérieur de la partie supérieure d'un récipient (26) prévu à bord pour stocker temporairement la charge.

10. Moissonneuse-batteuse selon la revendication 9, **caractérisée en ce que** le récipient des copeaux (26) comprend des moyens de vidange (31-34) et des moyens (29, 30) agencés pour empêcher le compactage de la charge et comprenant des vis transporteuses (29, 30).

11. Moissonneuse-batteuse selon la revendication 10, **caractérisée en ce que** lesdits moyens de vidange comprennent un tuyau vertical (32) ayant une longueur correspondant approximativement à la hauteur du récipient (26) dans lequel il est placé, le tuyau vertical (32) comprenant une vis transporteuse (31) pour soulever le matériau qui se trouve dans la partie inférieure du récipient (26) et le transférer à une autre vis transporteuse agencée dans un conduit de décharge horizontal (34) qui est relié au tuyau vertical (32) par une sellette d'attelage (33) qui permet la rotation de celui-ci.
